(19) Europäisches Patentamt
European Patent Office
Office européen des brevets

(11) Veröffentlichungsnummer: **0 167 798**
**A2**

(12) **EUROPÄISCHE PATENTANMELDUNG**

(21) Anmeldenummer: **85106796.7**

(22) Anmeldetag: **03.06.85**

(51) Int. Cl.[4]: **C 25 B 3/10**
H 01 B 1/12, C 08 G 73/06
C 08 G 61/12, C 08 L 65/00

(30) Priorität: **08.06.84 DE 3421296**

(43) Veröffentlichungstag der Anmeldung:
**15.01.86 Patentblatt 86/3**

(84) Benannte Vertragsstaaten:
**BE DE FR GB NL**

(71) Anmelder: **BASF Aktiengesellschaft**
**Carl-Bosch-Strasse 38**
**D-6700 Ludwigshafen(DE)**

(72) Erfinder: **Naarmann, Herbert, Dr.**
**Haardtblick 15**
**D-6719 Wattenheim(DE)**

(72) Erfinder: **Muenstedt, Helmut, Dr.**
**An dem Altenbach 41**
**D-6706 Wachenheim(DE)**

(54) **Verfahren zur Herstellung von p-gedopten Polyheterocyclen.**

(57) Verfahren zur Herstellung von elektrisch leitfähigen Homo- und Copolymeren von Verbindungen aus der Klasse der 5-gliedrigen heterocyclischen Verbindungen mit einem konjugierten π-Elektronensystem, die Stickstoff, Sauerstoff oder Schwefel als Heteroatom enthalten, durch Polymerisieren dieser Verbindungen oder von Mischungen dieser Verbindungen in Elektrolytlösungsmitteln in Gegenwart von aromatischen Di- oder Oligosulfonsäuren als Leitsalzen. Diese Polymerisate können als elektrische Leiter Verwendung finden.

EP 0 167 798 A2

## Verfahren zur Herstellung von p-gedopten Polyheterocyclen

Die Erfindung betrifft ein Verfahren zur Herstellung von elektrisch leitfähigen Homo- und Copolymerisaten von Verbindungen aus der Klasse der 5-gliedrigen heterocyclischen Verbindungen mit einem konjugierten $\pi$-Elektronensystem, die Stickstoff, Sauerstoff oder Schwefel als Heteroatom enthalten, durch elektrochemische Oxidation dieser Verbindungen oder von Mischungen dieser Verbindungen in Elektrolytlösungsmitteln in Gegenwart von Leitsalzen. Die so erhaltenen erfindungsgemäßen Copolymeren, die eine hohe elektrische Leitfähigkeit und ein hohes mechanisches Niveau haben, besitzen weitere vorteilhafte anwendungstechnische Eigenschaften.

In der US-Patentschrift 3.574.072 wird die elektrochemische Polymerisation von 5-gliedrigen und 6-gliedrigen heterocyclischen Verbindungen, wie Pyrrol, Thiophen oder Furan und deren Derivate beschrieben. Angaben über die Copolymerisation dieser Verbindungen bzw. über elektrische Eigenschaften der erhaltenen Polymeren sind in dieser Patentschrift jedoch nicht enthalten.

Aus der DE-OS 32 23 544 (= EP-OS 99.984) ist ein Verfahren zur Herstellung elektrisch leitfähiger Copolymerisate von Pyrrol mit anderen heterocyclischen Verbindungen wie Thiophen oder Furan und deren Derivate bekannt. Die Polymerisation wird in Gegenwart von Leitsalzen durchgeführt, so daß man p-gedopte Polymerisate erhält mit hoher elektrischer Leitfähigkeit und einem hohen mechanischen Niveau, die gegenüber bekannten elektrisch leitfähigen Pyrrolpolymersystemen ein verbessertes Eigenschaftsbild aufweisen.

Aufgabe der vorliegenden Erfindung ist es, ein neues weiteres Verfahren zur Herstellung von Homo- und Copolymerisaten von Verbindungen aus der Klasse von 5-gliedrigen heterocyclischen Verbindungen zu schaffen, die gleichzeitig eine hohe elektrische Leitfähigkeit und ein hohes mechanisches Niveau besitzen.

Es wurde nun gefunden, daß die Aufgabe durch ein Verfahren zur Herstellung von elektrisch leitfähigen Homo- und Copolymerisaten von Verbindungen aus der Klasse 5-gliedriger heterocyclischer Verbindungen mit einem konjugierten $\pi$-Elektronensystem, die Stickstoff, Sauerstoff oder Schwefel als Heteroatom enthalten, gelöst wird, wenn man die elektrochemische Oxidation dieser Verbindungen oder Mischungen dieser Verbindungen in Elektrolytlösungsmitteln in Gegenwart von aromatischen Di- oder Oligosulfonsäuren als Leitsalzen durchführt.

Ein weiterer Gegenstand der Erfindung ist die Verwendung der so hergestellten Polymerisate als Leiter in der Elektrotechnik.

Unter Verbindungen aus der Klasse der 5-gliedrigen heterocyclischen Verbindungen mit einem konjugierten $\pi$-Elektronensystem, die Stickstoff, Sauerstoff oder Schwefel als Heteroatom enthalten, werden im Rahmen dieser Erfindung Verbindungen aus der Klasse der Pyrrole, der Thiophene und der Furane verstanden.

Verbindungen aus der Klasse der Pyrrole sind das unsubstituierte Pyrrol selber als auch die substituierten Pyrrole, wie die N-Alkylpyrrole, N-Arylpyrrole, die an den C-Atomen monoalkyl- oder dialkylsubstituierten Pyrrole und die an den C-Atomen monohalogen- oder dihalogensubstituierten Pyrrole. Bei der Herstellung der erfindungsgemäßen Copolymeren können die Pyrrole allein oder in Mischung miteinander eingesetzt werden, so daß die Copolymere ein oder mehrere verschiedene Pyrrole eingebaut enthalten können. Vorzugsweise leiten sich die wiederkehrenden Pyrrol-Einheiten in den Copolymeren im wesentlichen von unsubstituiertem Pyrrol selber ab. Werden substituierte Pyrrole bei der Herstellung eingesetzt, sind hierfür die 3,4-Dialkylpyrrole, insbesondere solche mit 1 bis 4 C-Atomen im Alkylrest, wie 3,4-Dimethylpyrrol und 3,4-Diethylpyrrol, wie auch die 3,4-Dihalogenpyrrole, insbesondere 3,4-Dichlorpyrrol, bevorzugt.

Verbindungen aus der Klasse der Thiophene sind das unsubstituierte Thiophen selbst, das 2-, oder 3-, Methylthiophen, das 2-, 3-, Ethylthiophen oder andere alkylsubstituierte Thiophene, ebenso die 2fach mit Alkyl substituierten Thiophene, wie 2,3-Diethylthiophen oder auch die chlorsubstituierten Thiophene, wie 2-Chlor- oder 3-Bromthiophen, 3,4-Dichlorthiophen. Ebenso kommen Phenylthiophene, wie 2-Phenylthiophen oder das 3-Benzylthiophen in Frage.

Verbindungen aus der Klasse der Furane sind das unsubstituierte Furan selbst als auch die substituierten Furane, wie Alkylfurane, z.B. 3-Methyl-, 2-Ethyl- oder 3-Ethyl-, außerdem 2,2-Dimethyl- oder 2,3-Diethyl-Furan, sowie chlorsubstituierte Furane, wie 2-Chlorfuran, 3-Bromfuran oder 3-Dichlorfuran, ebenso 3,4-Difurylfuran oder das 2-Phenylfuran. Bevorzugt ist das unsubstituierte Furan selbst.

Die obengenannten 5-gliedrigen heterocyclischen Verbindungen mit konjugiertem $\pi$-Elektronensystem können aber auch mit bis zu 20 Gew.-% anderen mit diesen Verbindungen copolymerisierbaren Verbindungen copolymerisiert werden. Solche Verbindungen sind z.B. das Thiazol, das Oxazol, das Imidazol. Weiterhin kommen als Comonomeren Aminophenanthren, Benzidin, Anilin, Aminochrysen und/oder Aminocarbazol in Frage.

Zur Herstellung der Homo- und Copolymeren der Verbindungen aus der Klasse der 5-gliedrigen Heterocyclen werden die Monomeren, das sind die Pyrrole, Thiophene oder Furane und gegebenenfalls die Comonomeren, in einem Elektrolytlösungsmittel in Gegenwart des Leitsalzes anodisch oxidiert und dabei polymerisiert. Die Gesamtmonomer-Konzentration beträgt hierbei im allgemeinen etwa 0,1 Mol pro Liter Lösungsmittel. Da die elektrolytische Oxidation meist nur bis zu kleinen Umsätzen durchgeführt wird, kann diese Konzentration in weiten Grenzen unterschritten, aber auch überschritten werden.

Das erfindungsgemäße Verfahren wird in Elektrolytlösungsmitteln, die die Monomeren und die Leitsalze zu lösen vermögen, durchgeführt. Wenn mit Wasser mischbare organische Lösungsmittel Einsatz finden, kann zur Erhöhung der elektrischen Leitfähigkeit eine geringe Menge an Wasser, im allgemeinen bis zu 3 Gew.-%, bezogen auf das organische Lösungsmittel, zugesetzt werden, auch wenn in der Regel in einem wasserfreien System und insbesondere auch ohne Zusatz von alkalisch machenden Verbindungen gearbeitet wird. Das Lösungsmittel selbst kann protisch oder aprotisch sein. Bevorzugte Elektrolytlösungsmittel sind z.B. Aceton, Acetonitril, Dimethylformamid, Dimethylsulfoxid, Methylenchlorid, N-Methylpyrrolidon oder Propylencarbonat.

Als Leitsalze werden erfindungsgemäß aromatische Di- oder Oligosulfonsäuren oder deren Salze verwendet. Diese Verbindungen haben die allgemeine Formel $Ar-X_n$, wobei X gleich $SO_3^-Y^+$ bedeutet und n die Zahl 2 oder eine Zahl größer als 2 z.B. 3 oder 4 sein kann. Bevorzugt sind Disulfonsäuren und deren Salze.

In der obigen Formel bedeutet Ar

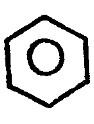 , 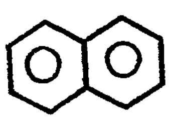 , 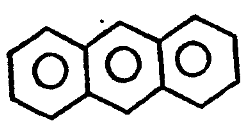 oder 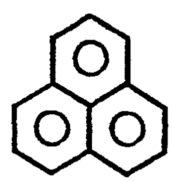 ;

Ar kann darüber hinaus auch ein kondensiertes Ringsystem sein wie Phthalocyanin oder Porphine, $Y^+$ ist ein Kation z.B. $H^+$, $Na^+$, $K^+$, $NH_4^+$ oder $Mg^{++}1/2$, $Y^+$ kann aber auch $N^+R^4$ oder $N^+R^3H$ sein, wobei $R = CH_3$, $C_2H_5$, $C_4H_9$ bis $C_{20}H_{41}$ bedeuten kann.

Außer den Di- oder Oligosulfonsäuren können auch bis zu 80 %, vorzugsweise bis zu 20 %, bezogen auf die Sulfonsäuren andere bekannte Leitsalze zugegen sein. Solche bekannten Leitsalze sind z.B. $NaClO_4$, $KBF_4$ oder $LiBF_4$, $N(C_4H_9)_4$ $PF_6$.

Die Leitsalzkonzentration beträgt in dem erfindungsgemäßen Verfahren im allgemeinen 0,001 bis 1, vorzugsweise 0,01 bis 0,1 Mol/Liter.

Bei dem Verfahren zur Herstellung der Polymeren aus der Klasse der 5-gliedrigen Heterocyclen wird bevorzugt in einer einfachen, üblichen elektrolytischen Zelle oder Elektrolyse-Apparatur, bestehend aus einer Zelle ohne Diaphragma, 2 Elektroden und einer externen Stromquelle, gearbeitet. Die Elektroden können dabei beispielsweise aus Nickel, Titan, Aluminium, Edelstahl oder auch aus gefüllten leitfähigen Polymeren oder auch aus C-Faser--Geweben bestehen oder aus Graphit sein; auch Edelmetallelektroden, bevorzugt Platinelektroden, können verwendet werden. Dabei ist es günstig, wenn zumindest die Anode, insbesondere aber beide Elektroden, flächig ausgebildet sind. In einer besonderen Ausgestaltungsform des erfindungsgemäßen Verfahren kann die Anode auch aus einem elektrisch leitfähigen Polymeren gebildet werden, wie z.B. aus durch anodische Oxidation hergetsellten Polypyrrol, dotiertem p-leitenden Polyacetylen oder dotiertem, p-leitendem Polyphenylen. In diesem Fall werden die Pyrrole und die Aminoaromaten auf die im allgemeinen filmförmigen leitenden Polymeren aufpolymerisiert.

Je nach Verfahrensführung können unterschiedliche Typen von Homo- und Copolymeren erhalten werden.

Außer der erwähnten einfachen elektrolytischen Zelle ohne Diaphragma können auch andere Elektrolyseeinrichtungen für das erfindungsgemäße Verfahren Einsatz finden, beispielsweise Zellen mit Diaphragma oder solche mit Referenzelektroden zur exakten Potentialbestimmung. Zur Kontrolle der Schichtstärke der abgeschiedenen Filme ist eine Messung der Strommenge (Amp/s) zweckmäßig.

Auch die filmförmige kontinuierliche Abscheidung von Verbindungen aus der Klasse der Pyrrole auf einer rotierenden Anode oder auf einem kontinuierlich laufendem Band ist eine bevorzugte Ausführungsform.

Normalerweise führt man die elektrolytische Oxidation bei Raumptemperatur und unter Inertgas durch. Da sich die Reaktionstemperatur bei der Polymerisation der Pyrrole als unkritisch erwiesen hat, kann die Temperatur jedoch in einem breiten Bereich variiert werden, solange die Erstarrungstemperatur bzw. Siedetemperatur des Elektrolytlöungsmittels nicht unter- bzw. überschritten wird. Im allgemeinen hat sich eine Reaktionstemperatur im Bereich von -40 bis +40°C, vorzugsweise bei +18 bis +25°C, als sehr vorteilhaft erwiesen.

Als Stromquelle für den Betrieb der elektrolytischen Zelle, in der das erfindungsgemäße Verfahren durchgeführt wird, eignet sich jede Gleichstromquelle, wie z.B. eine Batterie, die eine hinreichend hohe elektrische Spannung liefert. Zweckmäßigerweise liegt die Spannung im Bereich von etwa 1 bis 25 Volt; als besonders vorteilhaft haben sich Spannungen im Bereich von etwa 2 bis 12 Volt erwiesen. Die Stromdichte liegt üblicherweise im Bereich von 0,05 bis 100 $mA/cm^2$, vorzugsweise im Bereich von 0,1 bis 15 $mA/cm^2$.

Die während der elektrolytischen Oxidation anodisch abgeschiedenen erfindungsgemäßen Polymeren werden zur Entfernung von anhaftendem Leitsalz mit Lösungsmitteln gewaschen und bei Temperaturen von 30 bis 150°C, vorzugsweise unter Vakuum, getrocknet. Bei Einsatz von Graphit-, Edelmetall- oder ähnlichen Elektroden lassen sich danach die im allgemeinen filmförmig abgeschiedenen Copolymere leicht von der Elektrode ablösen, vor allem wenn Schichtstärken über 50 µm abgeschieden wurden. Werden als Anoden-Material leitfähige, filmförmige Polymere eingesetzt, so werden, wie erwähnt, die erfindungsgemäß eingesetzten Monomeren auf das polymere Elektrodenmaterial aufpolymerisiert, so daß man in diesem Fall ein Copolymer erhält, in dem das als Anode benutzte Polymere mit eingebaut ist.

Bei den durch das erfindungsgemäße Verfahren erhaltenen Polymerisaten der 5-gliedrigen Heterocyclen handelt es sich um elektrisch hochleitfähige Systeme, die zumindestens teilweise die aromatischen Di- oder Oligosulfonsäuren fest im System eingebaut enthalten. Man kann die erfindungsgemäßen Homo- und Copolymeren daher auch als Komplexe aus Kation der Polymeren mit sulfonischen Gegenanionen bezeichnen. Die Polymeren der Erfindung besitzen ein hohes mechanisches Niveau und ein insgesamt ausgewogenes besseres Eigenschaftsbild. Die Polymerfilme sind elastisch. Sie zeichnen sich auch insbesondere dadurch aus, daß sie im Gegensatz zu vergleichbaren Copolymerisaten elektrochemisch nicht vollständig entladen werden können. Die erfindungsgemäßen Copolymerisate eignen sich daher insbesondere als Leiter in der Elektrotechnik. Die Polymeren haben elektrische Leitfähigkeiten, die zwischen 50 und 250 $S/cm^2$ liegen.

Die im Beispiel genannten Teile sind Gewichtsteile.

Beispiel

Es wird eine Lösung aus 7,6 Teilen Pyrrol, 1600 Teilen Acetonitril und 13 Teilen des $N(C_4H_9)_3H^+$Salzes der 1,3-Benzoldisulfonsäure hergestellt. Als Elektroden dienen Nickelbleche, die in 2 cm Abstand angeordnet sind. Die Polymerisation wird für die Dauer von 45 Minuten durchgeführt. Die verwendete Stromdichte beträgt 2 $mA/cm^2$. Es werden 1,85 Teile eines Filmes erhalten, der 35 µm dick und besonders elastisch ist. Die Leitfähigkeit des Filmes beträgt 67,3 $S/cm^2$.

Dieser Film ließ sich innerhalb von 10 Stunden nicht potentiostatisch entladen oder cyclisieren, was ein Zeichen für die feste Fixierung des Gegenion im Polymeren ist. Außerdem zeigt dieser Polypyrrolfilm innerhalb von 1000 Stunden kein Absinken seiner Ausgangsleitfähigkeit.

## Patentansprüche

1. Verfahren zur Herstellung von elektrisch leitfähigen Homo- und Copolymerisaten von Verbindungen aus der Klasse der 5-gliedrigen heterocyclischen Verbindungen mit einem konjugierten π-Elektronensystem, die Stickstoff, Sauerstoff oder Schwefel als Heteroatom enthalten, durch elektrochemische Oxidation dieser Verbindungn oder von Mischungen dieser Verbindungen in Elektrolytlösungsmitteln in Gegenwart von Leitsalzen, dadurch gekennzeichnet, daß man als Leitsalze aromatische Di- oder Oligosulfonsäuren verwendet.

2. Verwendung von Polymerisaten, hergestellt nach dem Verfahren nach Anspruch 1, als Leiter in der Elektrotechnik.

287/84 vG/Kl